# EUROPEAN PATENT APPLICATION

(11) **EP 4 183 529 A1**
(43) Date of publication of application: **24.05.2023**
(21) Application number: 22208052.5
(22) Date of filing: 17.11.2022
(51) Int. Cl.: B25J 9/00

(54) **SUPPORT FOOT FOR AN EXOSKELETON FOR CARRYING LOADS, EXOSKELETON COMPRISING SAID SUPPORT FOOT AND METHOD OF CONTROLLING AN EXOSKELETON**

(30) Priority: 19.11.2021 IT 202100029327
(71) Applicant: Robosuits Srl, 20124 Milano (IT)
(72) Inventor: CARISI, Stefano, 20124 MILANO (IT); DONELLA, Nicolò, 20124 MILANO (IT); BECCHI, Francesco, 20124 MILANO (IT); MELIS, Alessandro, 20124 MILANO (IT)
(74) Representative: Studio Torta S.p.A.

(57) **Abstract**

A support foot for an exoskeleton for carrying loads configured has a front support assembly (12), which is configured to support a front portion of the foot of the user of the exoskeleton (1); a rear support assembly (13), which is configured to support a rear portion of the foot of the user of the exoskeleton (1); a flexible plate (14), which connects the front support assembly (12) and the rear support assembly (13); at least one first sensor (27), which is arranged in the front support assembly (12) and is configured to detect a pressure exerted by the foot of the user upon the front support assembly (12); and a second sensor (28), which is arranged in the rear support assembly (13) and is configured to detect components of a force and/or components of a torque exerted by the foot of the user upon the rear support assembly (13) along three Cartesian axes.

## Description

### CROSS-REFERENCE TO RELATED APPLICATIONS

This patent application claims priority from Italian patent application no. 102021000029327 filed on November 19, 2021 the entire disclosure of which is incorporated herein by reference.

### TECHNICAL FIELD

The invention relates to a support foot for an exoskeleton to be worn to carry loads and to an exoskeleton comprising said support foot.

The invention further relates to a method for controlling an exoskeleton.

### BACKGROUND

As it is known, wearable exoskeletons are used to increase a user's moving capacities. An exoskeleton typically comprises two support feet, each capable of being coupled to a foot of a user of the exoskeleton so as to support the user's weight; a plurality of movable parts, each capable of being coupled to a limb or to the trunk of the user; and a plurality of joints, which connect two or more movable parts to one another and can be active, semi-active or passive.

Each joint is configured to control the relative movement of the movable parts, which it connects so as to affect the dynamic behaviour of a given articulation of the user and assist the user while moving said articulation.

By way of example, in case the exoskeleton is used to support the user while carrying a load, the exoskeleton comprises a plurality of mechanical joints, which are configured to act upon the dynamic behaviour of the knee and hip articulations of the user and are provided with respective actuators to provide and operating torque so as to relieve the legs of the user from the weight of the carried load and follow the movement of said articulations.

In known exoskeletons, active and semi-active mechanical joints are controlled by a control unit, which is configured to receive, as an input, control parameters detected by sensors and to control the actuation of said mechanical joints.

By way of example, the control parameters comprise the relative position and/or acceleration of the movable parts connected by each mechanical joint and forces/torques exerted upon the mechanical joints and upon the movable parts of the exoskeleton.

In order to best control the mechanical joints of the exoskeleton, the control unit needs to receive, as an input, numerous control parameters and, as a consequence, the exoskeleton needs to be provided with a large number of sensors.

However, the large quantity of sensors makes the exoskeleton bulky and increases the manufacturing costs thereof.

### SUMMARY

An object of the invention is to provide a support foot for an exoskeleton capable of overcoming the drawbacks of the prior art.

In particular, an object of the invention is to provide a support foot for an exoskeleton, which is ergonomic, not bulky and economic to be manufactured.

According to the invention, there is provided a support foot for an exoskeleton for carrying loads configured to house a foot of a user of the exoskeleton; the support foot comprising:
- a front support assembly, which is configured to support a front portion of the foot of the user of the exoskeleton;
- a rear support assembly, which is configured to support a rear portion of the foot of the user of the exoskeleton;
- a flexible plate, which connects the front support assembly and the rear support assembly;
- at least one first sensor, which is arranged in the front support assembly and is configured to detect a pressure exerted by the foot of the user upon the front support assembly; and
- a second sensor, which is arranged in the rear support assembly and is configured to detect components of at least one force and/or components of at least one torque exerted by the foot of the user upon the rear support assembly along three Cartesian axes.

Thanks to the invention, the user of the exoskeleton can easily move on each kind of ground. In particular, the flexibility of the plate allows the user to bend the sole of the foot so as to comfortably and effectively walk on inclined surfaces and adjust to uneven grounds.

Furthermore, thanks to the first and the second sensor, it is possible to detect a distribution of the forces and of the torques exerted by the foot of the user of the exoskeleton, ensuring, at the same time, the ergonomics of the support foot. The special configuration of the first and of the second sensor limits the dimensions as well as the manufacturing costs of the support foot.

More in detail, the first sensor helps reduce the costs and the dimensions of the support foot, whereas the second sensor allows for a more precise detection of the forces and of the torques exerted by the foot of the user upon the rear support assembly.

In this way, the moving state of the user of the exoskeleton can be identified as a function of the distribution of the pressures detected by the first sensor and of the forces/torques detected by the second sensor and the active mechanical joints can be controlled as a function of the pressures and of said detected forces/torques, using different strategies.

Hereinafter, the terms "front" and "rear" are referred to an advancing direction, which is defined by the forward walk of the user of the exoskeleton. In other words, the term "front" indicates that the element to which it relates is in a more forward position along the advancing direction than a further element to which the term "rear" relates.

A further object of the invention is to provide method for controlling an exoskeleton for carrying loads capable of overcoming the drawbacks of the prior art.

According to the invention, there is provided a method for controlling an exoskeleton for carrying loads, the method comprising the steps of:
- detecting pressures exerted by a foot of the user upon a front support assembly of a support foot of the exoskeleton;
- detecting force and/or torque components exerted by the foot of the user along three Cartesian axes upon a rear support assembly of the support foot; and
- controlling at least one mechanical joint of the exoskeleton as a function of the detected pressures and of the detected force and/or torque components.

By so doing, the exoskeleton can be controlled in an ideal manner so as to relieve the legs of the user of the exoskeleton from the weight of the carried load, at the same time following the movement of the articulations of the lower limns of the user.

### BRIEF DESCRIPTION OF THE DRAWINGS

Further features and advantages of the invention are defined in the appended dependent claims and will be best understood upon perusal of the following description of a non-limiting embodiment, with reference to the accompanying figures, wherein:
- figure 1 is a perspective view of an exoskeleton for carrying loads according to the invention;
- figure 2 is a perspective view of a support foot of the exoskeleton of figure 1;
- figure 3 is a side elevation view of the support foot of figure 2;
- figure 4 is a cross-sectional view of the support foot of figure 2;
- figure 5 is a cross-sectional view, on a larger scale, of a detail of figure 4;
- figure 6 is a perspective view, with parts removed for greater clarity, of the support foot of figure 2; and
- figure 7 is perspective view of the support foot of the exoskeleton of figure 1 according to a further embodiment of the invention.

### DESCRIPTION OF EMBODIMENTS

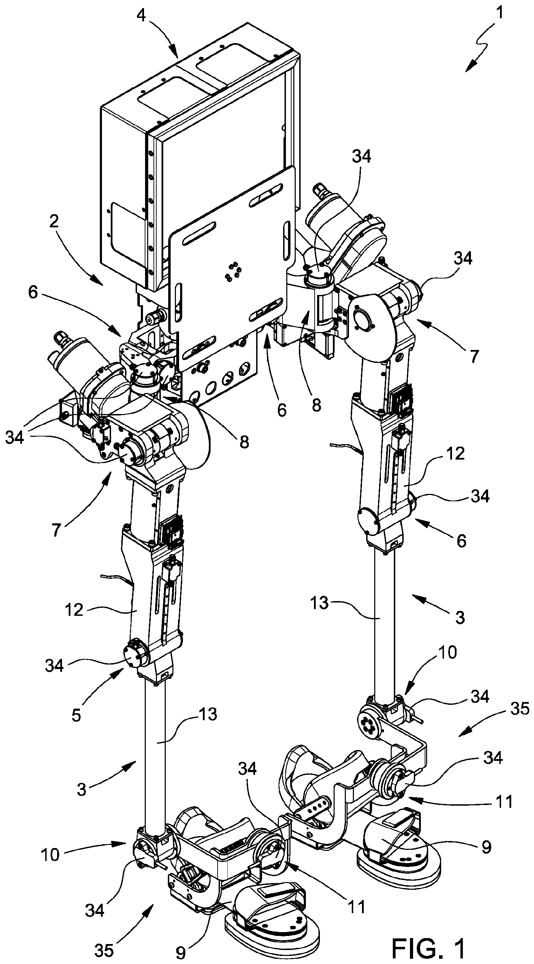

With reference to figure 1, reference number 1 indicates, as a whole, an exoskeleton for carrying loads, which can be worn by a user to increase his/her moving capacities.

In particular, the exoskeleton 1 is configured to assist the movement of the lower limbs of a user.

The exoskeleton 1 comprises a pelvic portion 2, two mechanical legs 3 connected to the pelvic portion 2 and a bearing portion 4 configured to house a load to be carried, which is not shown in the accompanying figures.

In particular, the exoskeleton 1 comprises two mechanical joints 5, each integrated in the respective mechanical leg 3 in order to control the flexion/extension movement of the knee articulation of a user; two mechanical joints 6, each arranged between the pelvic portion 2 and the respective mechanical leg 3 in order to control the adduction/abduction movement of the hip articulation of a user; two mechanical joints 7, each arranged between the pelvic portion 2 and the respective mechanical leg 3 in order to control the flexion/extension movement of the hip articulation of a user; and two mechanical joints 8, each arranged between the pelvic portion 2 and the respective mechanical leg 3 in order to control the internal/external rotation movement of the hip articulation of a user.

Furthermore, the exoskeleton 1 comprises two support feet 9, each coupled to a respective mechanical leg 3 and configured to house a foot of a user of the exoskeleton 1.

In particular, the exoskeleton 1 comprises two coupling portions 35 to connect each support foot 9 to the respective mechanical leg 3. Each coupling portion 35 comprises a passive joint 10 arranged between the respective support foot 9 and the respective mechanical leg 3 so as to allow for the dorsiflexion/plantar flexion of the foot of a user; and a passive joint 11 arranged between the respective support foot 9 and the respective mechanical leg 3 so as to allow for the supination/pronation of the foot of a user.

Furthermore, each mechanical joint 5, 6, 7, 8 and each passive joint 10, 11 comprise a respective angular position sensor 34, which is configured to detect the relative angular position between the movable bodies connecting them.

In particular, the passive joint 11 is located in a zone arranged above the instep of the user, when the exoskeleton 1 is worn by the user.

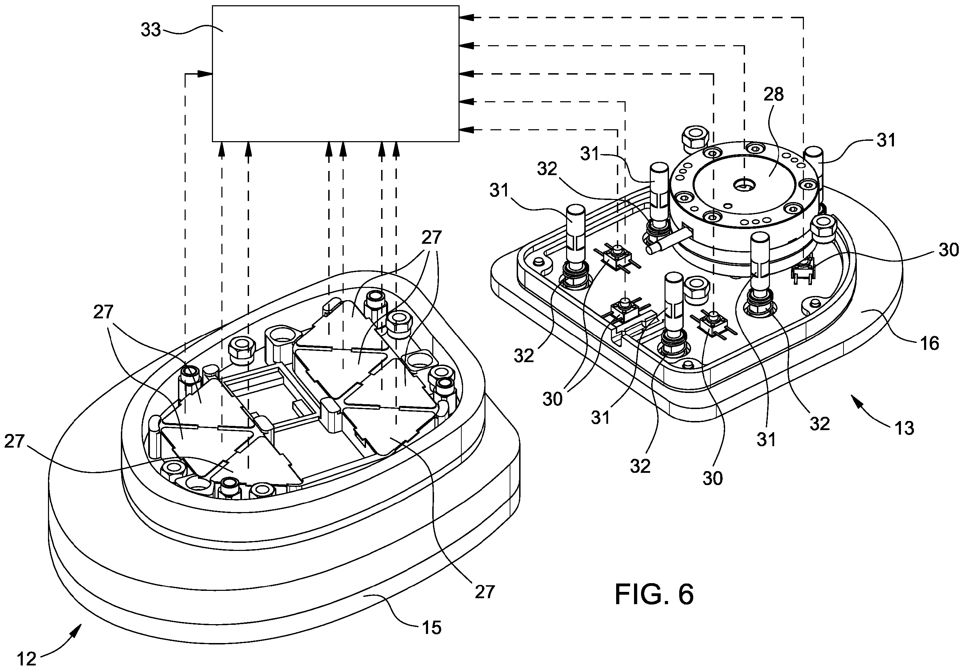

More in detail, the bearing portion 4 is configured to be arranged behind the back of a user of the exoskeleton 1 and comprises at least one power storage device, which is not shown in the accompanying figures, to power each mechanical joint 5, 6, 7 and 8 and a control unit 33 (figure 6) to control each mechanical joint 5, 6, 7 and 8.

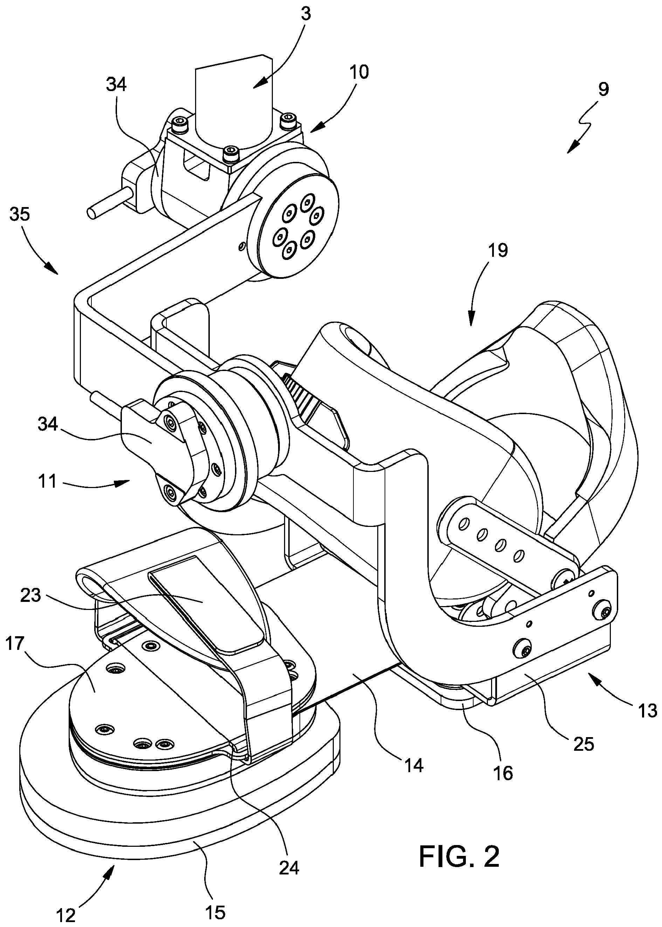

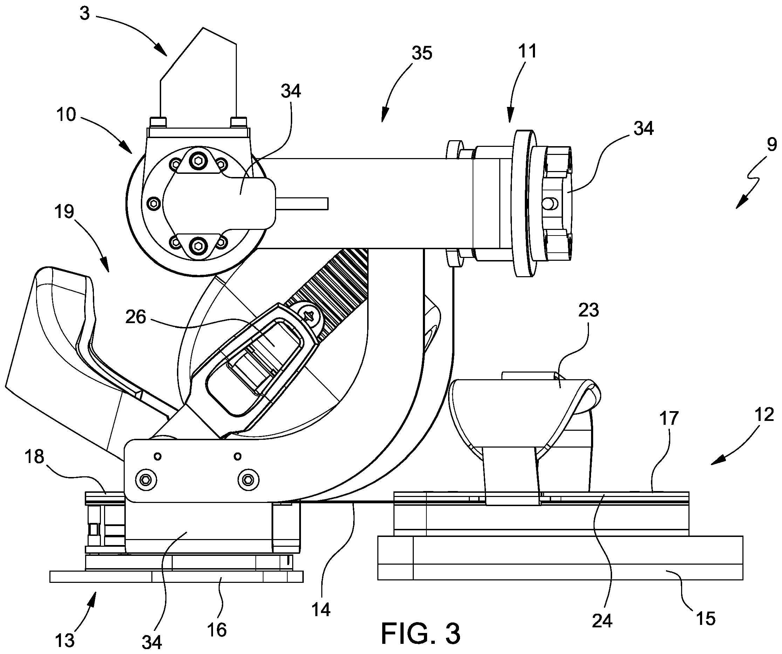

With reference to figures 2 and 3, each support foot 9 comprises a front support assembly 12, which is configured to support a front portion of a foot of a user of the exoskeleton 1; a rear support assembly 13, which is configured to support a rear portion of the foot of a user of the exoskeleton 1; and a flexible plate 14, which connects the front support assembly 12 and the rear support assembly 13.

In particular, the flexible plate 14 is attached to the front support assembly 12 and to the rear support assembly 13 so as to spread the front support assembly 12 apart from the rear support assembly 13.

More in detail, the flexible plate 14 is made of harmonic steel.

The front support assembly 12 comprises a front support base 15 configured to rest on a ground and the rear support assembly 13 comprises a rear support base 16 configured to rest on a ground.

In the specific case described and shown herein, the front support base 15 and the rear support base 16 are substantially flat and are made of a rigid material.

According to an alternative embodiment, the front support base 15 and the rear support base 16 are made of a deformable or flexible material.

In particular, the front support assembly 12 comprises a rigid plate 17 attached to a front portion of the flexible plate 14.

According to an embodiment, each support foot 9 comprises a coupling mechanism 19 configured to be arranged around the foot of the user of the exoskeleton 1 so as to lock the foot of the user against the rear support assembly 13. In particular, the coupling mechanism 19 is coupled to the rear support assembly 13.

Furthermore, the rear support assembly 13 comprises a fixing flange 25, which is attached to an end portion of the respective mechanical leg 3.

The front support assembly 12 comprises a front strap 23, which is coupled to the front support assembly 12 and is configured to be placed around a front portion of the foot of the user so as to lock the foot of the user against the front support assembly 12.

In the specific case described and shown herein, which is not limiting for the invention, the front support assembly 12 comprises a connection plate 24, which is arranged between the front portion of the flexible plate 14 and the rigid plate 17 and is connected to the front strap 23.

With reference to figure 3, the rear support assembly 13 comprises a rigid plate 18 attached to a rear portion of the flexible plate 14.

Furthermore, the coupling mechanism 19 comprises an adjustable latch 26, preferably a ratchet latch.

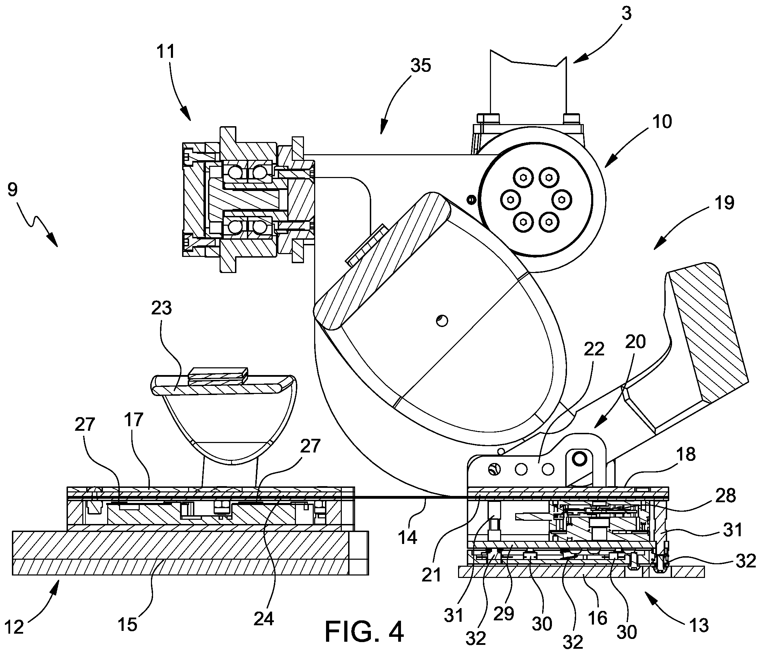

With reference to figure 4, the rear support assembly 13 comprises a fixing flange 20, which is provided with a base wall 21, which is attached between the rear portion of the flexible plate 14 and the rigid plate 18, and with two connection walls 22, each of which extends along a plane transverse to the base wall 21 and is fixed to the coupling mechanism 19.

Each support foot 9 comprises at least one sensor 27, which is arranged in the front support assembly 12 and is configured to detect a pressure exerted by the foot of the user upon the front support assembly 12; and a sensor 28, which is arranged in the rear support assembly 13 and is configured to detect the components of at least one force and/or the components of at least one torque exerted by the foot of the user upon the rear support assembly 13 along three Cartesian axes.

In particular, the sensor 27 is arranged between the flexible plate 14 and the front support base 15. The sensor 28 is arranged between the flexible plate 14 and the rear support base 16.

More in detail, the flexible plate 14 extends between the front support assembly 12 and the rear support assembly 13 so as to be arranged above the sensor 27 and the sensor 28.

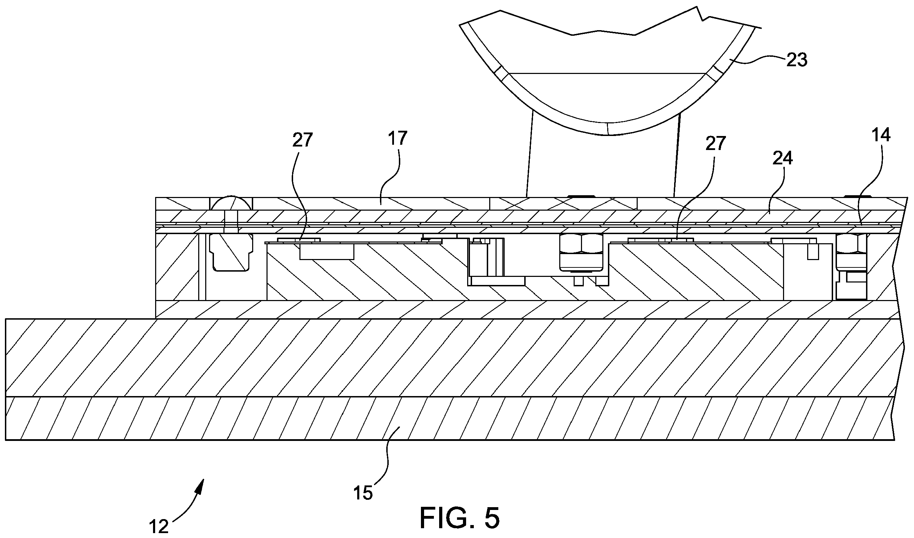

With reference to figure 5, each support foot 9 comprises a plurality of sensors 27 distributed in the front support assembly 12 in order to detect a distribution of pressures exerted by the foot of the user upon the front support assembly 12.

Each sensor 27 has a mainly planar shape and extends along a plane substantially parallel to the flexible plate 14.

In particular, each sensor 27 is coupled to the front portion of the flexible plate 14, on the opposite side relative to the rigid plate 17.

According to an embodiment, each sensor 27 is a capacitive sensor. In particular, each sensor 27 comprises ten pressure detection points.

According to an embodiment, which is not limiting for the invention, each sensor 27 is configured to only detect a pressure exerted by the foot of the user upon the front support assembly 12 in a direction substantially perpendicular to the front support base 15.

With reference to figure 4, the sensor 28 is a force/torque sensor with six degrees of freedom. In particular, the sensor 28 comprises a plurality of strain gauges connected so as to form an electrical circuit of the Wheatstone bridge kind.

According to an embodiment, which is not limiting for the invention, the sensor 28 comprises 12 semiconductor strain gauges arranged in a configuration with 6 Wheatstone half-bridge.

In particular, the rear support assembly 13 comprises an intermediate plate 29 arranged between the flexible plate 14 and the rear support base 16. The sensor 28 is arranged between the flexible plate 14 and the intermediate plate 29.

Furthermore, the rear support assembly 13 comprises at least one contact sensor 30, which is arranged in the rear support assembly 13 and is configured to detect a contact of the rear support assembly 13 with the ground.

In the specific case described and shown herein, the rear support assembly 13 comprises a plurality of contact sensors 30 distributed between the intermediate plate 29 and the rear support base 16.

In particular, each contact sensor 30 comprises a switch configured to be selectively activated when the intermediate plate 29 is pushed towards the rear support base 16 due to the weight force of the user of the exoskeleton 1.

The rear support assembly 13 further comprises a plurality of limit stop elements 31, each arranged between the flexible plate 14 and the rear support base 16 and provided with an elastic element 32 so as to limit the movement of the flexible plate 14 towards the rear support base 16.

With reference to figure 6, each support foot 9 comprises seven sensors 27, each with a triangular shape.

In particular, the sensors 27 are arranged along a same plane. More in detail, three sensors 27 are arranged in a front portion of the front support assembly 12 and four sensors 27 are arranged in a rear portion of the front support assembly 12.

The number and the distribution of the sensors 27 in the front support assembly 12 can change depending on the specific application of the support foot 9 and are not limiting for the invention.

The control unit 33 is connected to the sensors 27 in order to receive pressure signals indicative of the pressures detected by the sensors 27 and to the sensor 28 in order to receive force/torque signals indicative of the force and torque components detected by the sensor 28 and is configured to control the mechanical joints 5, 6, 7 and 8 as a function of the pressure signals and of the force/torque signals received.

Furthermore, the control unit 33 is connected to each contact sensor 30 in order to receive contact signals indicative of a contact of the rear support assembly 13 with the ground.

In particular, the control unit 33 is configured to estimate a phase of a walk of the user of the exoskeleton 1 as a function of the pressure signals received from the sensors 27, of the force/torque signals received from the sensor 28 and of the contact signals received from the contact sensors 30.

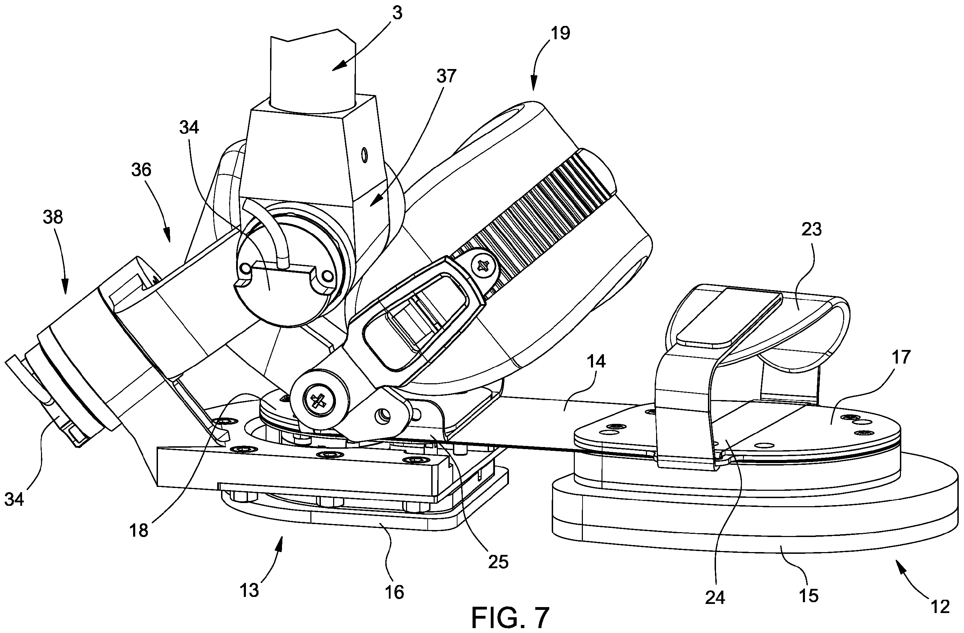

With reference to figure 7, a second embodiment of the invention is shown, wherein the exoskeleton 1 comprises two coupling portions 36 to couple each support foot 9 to the respective mechanical leg 3. Each coupling portion 36 comprises a passive joint 37 arranged between the respective support foot 9 and the respective mechanical leg 3 so as to allow for the dorsiflexion/plantar flexion of the foot of a user; and a passive joint 38 arranged between the respective support foot 9 and the respective mechanical leg 3 so as to allow for the supination/pronation of the foot of a user.

In particular, the passive joint 38 is located in a zone arranged behind the heel of the user, when the exoskeleton 1 is worn by the user.

In use and with reference to figure 4, when the user of the exoskeleton 1 is in a standing straight position, said user rests the foot on the front support assembly 12 and on the rear support assembly 13.

Under these circumstances, the contact sensors 30 detect that the heel of the user is in contact with the ground.

When the user of the exoskeleton 1 moves by walking, the user lifts the heel from the ground, at first keeping the tip of the foot on the ground, thus determining the bending of the flexible plate 14. Under these circumstances the contact sensors 30 detect that the heel of the user is lifted from the ground.

During the use of the exoskeleton 1 by the user, the sensors 27 and 28 of each support foot 9 detect the distribution of the forces and of the torques exerted by the feet of the user upon the respective support feet 9.

The control unit 33 receives, as an input, pressure signals detected by the sensors 27 and force/torque signals detected by the sensor 28 and controls the mechanical joints 5, 6, 7 and 8 as a function of the pressure signals and of the force/torque signals received.

In particular, the control unit 33 estimates in real time a phase of a walk of the user of the exoskeleton 1 as a function of the pressure signals and of the force/torque signals received in order to control the mechanical joints 5, 6, 7 and 8 so as to follow the movements of the lower limbs of the user of the exoskeleton 1.

More in detail, the control unit 33 estimates in real time the distribution of the forces as a function of the pressure signals and of the force/torque signals received in order to calculate the position of the centre of gravity of the user of the exoskeleton 1 and adjust the commands given to the mechanical joints 5, 6, 7 and 8 as a function of said calculated position.

Finally, the invention can evidently be subjected to variants to the embodiment described herein, though without going beyond the scope of protection set forth by the appended claims.

## Claims

1. A support foot for an exoskeleton for carrying loads configured to house a foot of a user of the exoskeleton; the support foot (9) comprising:
- a front support assembly (12), which is configured to support a front portion of the foot of the user of the exoskeleton (1);
- a rear support assembly (13), which is configured to support a rear portion of the foot of the user of the exoskeleton (1);
- a flexible plate (14), which connects the front support assembly (12) and the rear support assembly (13);
- at least one first sensor (27), which is placed in the front support assembly (12) and is configured to detect a pressure exerted by the foot of the user on the front support assembly (12); and
- a second sensor (28), which is placed in the rear support assembly (13) and is configured to detect components of at least one force and/or components of at least one torque exerted by the foot of the user on the rear support assembly (13) along three Cartesian axes.

2. The support foot as claimed in claim 1, wherein the flexible plate (14) is attached to the front support assembly (12) and the rear support assembly (13) so as to distance the front support assembly (12) from the rear support assembly (13).

3. The support foot as claimed in claim 1 or 2, wherein the flexible plate (14) is made of harmonic steel.

4. The support foot as claimed in any one of the foregoing claims, wherein the front support assembly (12) comprises a front support base (15) configured to rest on a ground and/or the rear support assembly (13) comprises a rear support base (16) configured to rest on a ground.

5. The support foot as claimed in claim 4, wherein the first sensor (27) is placed between the flexible plate (14) and the front support base (15) and/or the second sensor (28) is placed between the flexible plate (14) and the rear support base (16).

6. The support foot as claimed in any one of the foregoing claims, wherein the front support assembly (12) comprises a first rigid plate (17) attached to a front portion of the flexible plate (14) and/or the rear support assembly (13) comprises a second rigid plate (18) attached to a rear portion of the flexible plate (14).

7. The support foot as claimed in any one of the foregoing claims, wherein the first sensor (27) has a substantially planar shape and extends along a plane substantially parallel to the flexible plate (14).

8. The support foot as claimed in any one of the foregoing claims, wherein the first sensor (27) is a capacitive type sensor.

9. The support foot as claimed in any one of the foregoing claims, and comprising a plurality of first sensors (27) distributed in the front support assembly (12) to detect a distribution of pressures exerted by the foot of the user on the front support assembly (12).

10. The support foot as claimed in any one of the foregoing claims, wherein the second sensor (28) is of the force/torque type with six degrees of freedom.

11. The support foot as claimed in any one of the foregoing claims, and comprising at least one contact sensor (30), which is placed in the rear support assembly (13) and is configured to detect a contact of the rear support assembly (13) with the ground.

12. The support foot as claimed in any one of the foregoing claims, and comprising a coupling mechanism (19) configured to be placed around the foot of the user of the exoskeleton (1) so as to lock the foot of the user onto the rear support assembly (13).

13. The support foot as claimed in claim 12, wherein the coupling mechanism (19) comprises an adjustable latch (26), preferably a ratchet latch.

14. An exoskeleton for carrying loads, the exoskeleton (1) comprising a pelvic portion (2), two mechanical legs (3) connected to the pelvic portion (2), and two support feet (9) as claimed in any one of the foregoing claims and connected to respective mechanical legs (3).

15. The exoskeleton as claimed in claim 14, wherein each mechanical leg (3) is coupled to the respective rear support assembly (13).

16. The exoskeleton as claimed in claim 14 or 15, and comprising a first mechanical joint (5) integrated into each mechanical leg (3) to control flexion/extension movement of the knee joint of a user of the exoskeleton (1); at least one second mechanical joint (6; 7; 8) placed between the pelvic portion (2) and one mechanical leg (3) to control the flexion/extension or adduction/abduction or internal/external rotation movement of the hip joint of a user of the exoskeleton (1); and a control unit (33), which is connected to the first sensor (27) to receive pressure signals indicative of the pressures detected by the first sensor (27) and to the second sensor (28) to receive force/torque signals indicative of the force and torque components detected by the second sensor (28) and is configured to control the first mechanical joint (5) and/or the second mechanical joint (6; 7; 8) as a function of the received pressure signals and the received force/torque signals.

17. The exoskeleton as claimed in claim 16, wherein the control unit (33) is configured to estimate a phase of a walk of the user of the exoskeleton (1) as a function of the received pressure signals and the received force/torque signals.

18. A method of controlling an exoskeleton for carrying loads, the method comprising the steps of:
- detecting pressures exerted by a foot of the user on a front support assembly (12) of a support foot (9) of the exoskeleton (1);
- detecting force and/or torque components exerted by the foot of the user along three Cartesian axes on a rear support assembly (13) of the support foot (9); and
- controlling at least one mechanical joint (5; 6; 7; 8) of the exoskeleton (1) as a function of the detected pressures and of the detected force and/or torque components.

19. The method as claimed in claim 18, and comprising the step of estimating a phase of a walk of the user of the exoskeleton (1) as a function of the detected pressures and the detected force and/or torque components.
